# EUROPÄISCHE PATENTSCHRIFT

(11) **EP 1 184 804 B1**
(45) Veröffentlichungstag und Bekanntmachung des Hinweises auf die Patenterteilung: **02.08.2006**
(21) Anmeldenummer: 01250316.5
(22) Anmeldetag: 05.09.2001
(51) Int. Cl.: G06F 1/16, G06F 3/033

(54) **System zur Bildwiedergabe**
Image reproduction system
Système pour la reproduction d'images

(30) Priorität: 05.09.2000 DE 10044534
(43) Veröffentlichungstag der Anmeldung: 06.03.2002
(73) Patentinhaber: Rottwinkel, León, 10825 Berlin (DE)
(72) Erfinder: Rottwinkel, León, 10825 Berlin (DE)
(74) Vertreter: Grünecker, Kinkeldey, Stockmair & Schwanhäusser Anwaltssozietät

(56) Entgegenhaltungen:
- US-A- 5 563 631

## Beschreibung

Die vorliegende Erfindung betrifft ein System zur Bildwiedergabe mit einer Ausgabeeinheit, die ein Gehäuse und ein Ausgabeelement mit einer Ausgabeoberfläche zur Ausgabe von Bildinformationen aufweist, einer damit verbundenen Verarbeitungseinheit zur Steuerung der Ausgabe der Bildinformationen sowie wenigstens einer mit der Verarbeitungseinheit verbundenen Eingabeeinheit zur Erzeugung von Steuersignalen für die Verarbeitungseinheit zur Beeinflussung der auf der Ausgabeoberfläche dargestellten Bildinformationen, die wenigstens ein erstes Betätigungselement aufweist.

Es ist eine Vielzahl von Varianten bekannt, wie die auf einer Ausgabeoberfläche einer Ausgabeeinheit, beispielsweise eines Displays, dargestellte Bildinformation mittels entsprechender Eingabeeinheiten verändert werden kann.

Als gebräuchlichste Eingabeeinheiten werden Tastatur, Maus, Joystick, Grafiktablett usw. verwendet. Diese weisen jedoch zum einen den Nachteil auf, dass sie getrennt von der Ausgabeeinheit in einem eigenen Gehäuse angeordnet sind, welches relativ viel Platz bzw. Stellfläche benötigt. Zum anderen ist mit diesen Eingabeeinheiten der Nachteil verbunden, dass beispielsweise wenig geübte Nutzer solcher Systeme in der Regel einige Schwierigkeiten haben, mit der Eingabeeinheit einen entsprechenden Cursor auf der Ausgabeoberfläche durch entsprechende Bewegungen oder Betätigungen der Eingabeeinheit zu steuern.

Bei anderen Systemen, die beispielsweise ein berührungs- oder lichtempfindliches Display oder dergleichen aufweisen, dient die Ausgabeeinheit selbst zumindest teilweise als Eingabeeinheit. Diese Systeme ermöglichen zwar eine sehr intuitive und einfache Eingabe von Steuerbefehlen. Sie weisen jedoch zum einen den Nachteil auf, dass bei der Eingabe zumindest ein Teil des Displays von der Hand des Nutzers oder von der Eingabehilfe, beispielsweise einem herkömmlichen Stift oder einem Lichtstift, verdeckt ist. Zum anderen führt die ständige Berührung der Ausgabeoberfläche zwangsläufig zu deren Verschmutzung und Beschädigung, beispielsweise durch Verkratzen.

Bei Mobiltelefonen ist es beispielsweise bekannt, ein Betätigungselement für eine solche Eingabeeinheit in Form einer drehbaren Walze oder eines drehbaren Rades vorzusehen, mit der ein Cursor o. ä auf dem Display auf und ab bewegt werden kann. Hierbei sind jedoch nur sehr einfache und damit eingeschränkte Steuermöglichkeiten gegeben, nämlich lediglich das Auf- und Abbewegen das Cursors. Zudem ist bei diesen Gestaltungen nur bedingt eine Zuordnung der Position des Betätigungselements zu einer bestimmten Cursorposition möglich.

Ein system gemäß dem Oberbegriff des Anspruchs 1 ist aus dem Dokument US-A-5 563 631 bekannt.

Der vorliegenden Erfindung liegt daher die Aufgabe zu Grunde, eine gattungsgemäßes System anzugeben, bei dem bei geringem Platzaufwand und hoher Robustheit eine einfache und intuitive Steuerung der Ausgabe der Bildinformation durch einen Nutzer möglich ist.

Diese Aufgabe wird ausgehend von einem System gemäß dem Oberbegriff des Anspruchs 1 durch die im kennzeichnenden Teil des Anspruchs 1 angegebenen Merkmale gelöst.

Die Erfindung schließt die technische Lehre ein, dass man eine besonders einfache und intuitive Steuerung der Ausgabe der Bildinformation durch den Nutzer des Systems ermöglicht, wenn das Ausgabeelement zur Ausbildung des Betätigungselements bezüglich des Gehäuses beweglich angeordnet ist. Der Benutzer muss dann beispielsweise lediglich das Ausgabeelement intuitiv in eine entsprechende Richtung bewegen, um die Ausgabe der Bildinformation zusteuern.

Die erfindungsgemäße Gestaltung bewirkt weiterhin, dass der Nutzer zum einen seinen Blick auch bei Betätigung des ersten Betätigungselements, also beim Bewegen des Ausgabeelements relativ zum Gehäuse, so gut wie nicht von der Ausgabeoberfläche abwenden muss. Zum anderen ermöglicht die erfindungsgemäße Konfiguration eine besonders kompakte und damit platzsparende Anordnung.

Durch die erfindungsgemäße Gestaltung können mittels der Eingabeeinheit in einfacher Weise die auf der Ausgabeoberfläche ausgegebenen Bildinformationen beeinflusst werden. So können beispielsweise Grafik-, Bild-, und Textinformationen vergrößert oder verkleinert werden. Texte und Bildteile können verschoben werden. Entsprechend angeordnete Buchstaben, Ziffern, Texte bzw. Textteile oder Piktogramme können angewählt und ausgewählt werden. Dies kann beispielsweise dadurch geschehen, dass durch die Bewegung des Ausgabeelements die Bewegung eines Cursors oder dergleichen auf der Ausgabeoberfläche gesteuert wird. Es kann weiterhin der Ablauf entsprechender Bildsequenzen beeinflusst werden. So kann beispielsweise durch eine entsprechende Bewegung des Ausgabeelements relativ zum Gehäuse von einem Bild zum nächsten bzw. zum vorherigen geschaltet werden.

Hierbei ist es im übrigen auch möglich, dass die Geschwindigkeit und zusätzlich oder alternativ der Beschleunigung der Bewegung zwischen Ausgabeelement und Gehäuse erfasst wird und gesteuert durch die Verarbeitungseinheit eine dementsprechende Veränderung der auf der Ausgabeoberfläche wiedergegebenen Bildinformation erfolgt. Es versteht sich, dass hierbei dann auch eine entsprechende Einrichtung zur Erfassung der Geschwindigkeit bzw. der Beschleunigung des Ausgabeelements bezüglich des Gehäuses vorgesehen ist.

Besonders vorteilhaft lässt sich die Erfindung im Zusammenhang mit tragbaren Computern, insbesondere im Zusammenhang mit einem so genannten PDA (Personal Digital Assistant), Mobiltelefonen oder vergleichbaren Geräten einsetzen. Sie kann jedoch auch im Zusammenhang mit feststehenden Einrichtungen, beispielsweise Informationsterminals oder dergleichen, ihre Vorteile zur Geltung bringen. Das System kann aus verschiedenen Einzelkomponenten bestehen, die zumindest teilweise in getrennten Gehäusen untergebracht sind. Es versteht sich jedoch, dass das System auch in einem einzigen Gerät integriert sein kann.

Bevorzugt ist das Ausgabeelement dabei nach Art eines Joysticks bezüglich des Gehäuses verschwenkbar, da sich hierbei eine besonders einfache Gestaltung ergibt. Vorteilhafterweise ist das Ausgabeelement dabei bezüglich und entlang einer konvexen Oberfläche des Gehäuses in vorgegebenen oder beliebigen Richtungen verschieblich. Es versteht sich jedoch, dass der anderen Varianten auch eine Konfiguration gewählt sein kann, bei der das Ausgabeelement bezüglich und entlang einer konkaven Oberfläche des Gehäuses in vorgegebenen oder beliebigen Richtungen verschieblich ist.

Bei weiteren bevorzugten Ausführungsformen ist das Ausgabeelement im wesentlichen senkrecht und zusätzlich oder alternativ im wesentlichen parallel zur Ausgabeoberfläche bezüglich des Gehäuses verschieblich angeordnet. So kann beispielsweise durch ein Verschieben des Ausgabeelements senkrecht zur Ausgabeoberfläche eine Zoomfunktion gesteuert werden.

Die Erfassung der Bewegung bzw. Position des Ausgabeelements bezüglich des Gehäuses kann durch einen oder mehrere beliebige herkömmliche, mit der Verarbeitungseinrichtung verbundene Sensoren erfolgen.

Bei bevorzugten Varianten des erfindungsgemäßen Systems sind eine an dem Ausgabeelement angeordnete, mit der Verarbeitungseinrichtung verbundene Bildaufnahmeeinrichtung und eine an dem Gehäuse angeordnete, der Bildaufnahmeeinrichtung zugeordnete Kodiereinrichtung vorgesehen. Alternativ ist die Bildaufnahmeeinrichtung an dem Gehäuse angeordnet und die Kodiereinrichtung an dem Ausgabeelement angeordnet. Beide sind zum Erzeugen von Steuersignalen für die Verarbeitungseinheit in Abhängigkeit von der Position des Ausgabeelementes bezüglich des Gehäuses derart ausgebildet und angeordnet, dass die Bildaufnahmeeinrichtung in Abhängigkeit von der Position des Ausgabeelementes bezüglich des Gehäuses unterschiedliche Bildinformationen von der Kodiereinrichtung aufnimmt.

Hierbei werden mit anderen Worten je nachdem, welche Bildinformation die Bildaufnahmeeinrichtung von der Kodiereinrichtung aufnimmt, unterschiedliche Steuersignale für die Verarbeitungseinheit erzeugt, um so die Ausgabe auf der Ausgabeoberfläche in Abhängigkeit von der Position des Ausgabeelements bezüglich des Gehäuses zu steuern.

Ein Vorteil dieser Variante liegt darin, dass sämtliche Bewegungen des Ausgabeelements bezüglich des Gehäuses durch einen einzigen Sensor, nämlich die Bildaufnahmeeinrichtung erfasst werden können.

Bevorzugt ist die Kodiereinrichtung so ausgebildet und angeordnet, dass die Bildaufnahmeeinrichtung je nach ihrer Position bezüglich des Gehäuses und damit der Kodiereinrichtung unterschiedliche Bildinformationen, d. h. Bilder, von der Kodiereinrichtung aufnimmt.

Bevorzugt ist die Kodiereinrichtung hierzu nach Art einer zweidimensionalen Farb- oder Graustufenskala ausgebildet, da hiermit in besonders einfache Weise sichergestellt ist, dass die Bildaufnahmeeinrichtung die nach Positionierung bezüglich der Kodiereinrichtung unterschiedliche Bildinformationen aufnimmt.

Hierbei können beliebig feine oder grobe Auflösungen gewählt sein, je nachdem wie unmittelbar die Steuerung auf eine Bewegung des Ausgabeelements bezüglich des Gehäuses ansprechen soll. Mit anderen Worten kann zum einen vorgesehen sein, dass die Kodiereinrichtung entsprechend große Bereiche mit gleich bleibender Farbe bzw. Graustufe aufweist, sodass die Bildaufnahmeeinrichtung in einem bestimmten eingeschränkten Bewegungsbereich des Ausgabeelements bezüglich des Gehäuses eine im wesentlichen gleich bleibende Bildinformationen aufnimmt. Zusätzlich oder alternativ kann aber auch die Bildverarbeitung der durch die Bildaufnahmeeinrichtung aufgenommenen Bilder in der Verarbeitungseinrichtung so erfolgen, dass erst bei einem entsprechend großen Unterschied zwischen den aufgenommenen Bildern unterschiedliche Steuersignale für die Ansteuerung der Ausgabe erzeugt werden.

Die Kodiereinrichtung kann nach Art einer Graustufen- oder Farbwahlskala ausgebildet sein, wie sie beispielsweise von Bildbearbeitungsprogrammen her bekannt ist. Auf dieser Graustufen- oder Farbwahlskala ist beispielsweise ein Graustufenspektrum bzw. ein Farbspektrum kreisförmig bzw. fächerförmig zum Mittelpunkt der Fläche angeordnet. Der Mittelpunkt der Fläche kann dabei als in sich geschlossene schwarze oder weiße Fläche entsprechend großer Ausdehnung ausgebildet sein.

Bei einer Farbskala kann die Helligkeit der einzelnen Farbwerte in radialer Richtung variieren, sodass die Farbwerte nach außen in die dunklen Farbwerte gehen, während die nach innen ins Weiß neutralisiert werden oder umgekehrt. Hierdurch erfolgt beispielsweise eine Durchschattierung einer RGB- oder CMYK-Skala von innen nach außen.

Bei der Bildaufnahmeneinrichtung kann es sich um eine beliebige herkömmliche Bildaufnahmeneinrichtung handeln. Wegen ihrer geringen Herstellungskosten und ihrer besonders kompakten Bauweise finden bevorzugt CCD- oder CMOS-Kameramodule Anwendung.

Die soeben beschriebene Ansteuerung einer Verarbeitungseinheit mittels einer relativ zu einer Kodiereinrichtung beweglich angeordneten Bildaufnahmeneinrichtung lässt sich besonders vorteilhaft im Zusammenhang mit der erfindungsgemäßen Anordnung einsetzen. Sie stellt jedoch für sich einen eigenständigen schutzwürdigen Erfindungsgedanken dar, der auch unabhängig von der beschriebenen Anordnung mit einem bezüglich eines Gehäuses beweglichen Ausgabeelement eingesetzt werden kann. Die Bildaufnahmeneinrichtung und die Kodiereinrichtung können an beliebigen anderen zueinander beweglichen Bauteilen angeordnet sein, um eine beliebige Verarbeitungseinheit zu beliebigen Zwecken entsprechend anzusteuern.

Die Lagerung bzw. Befestigung des Ausgabeelements an dem Gehäuse kann in beliebiger bekannter Weise ausgebildet sein, um eine entsprechende Beweglichkeit des Ausgabeelements bezüglich des Gehäuses zuzulassen.

Bevorzugt ist das Ausgabeelement mit dem Gehäuse über eine Federeinrichtung beweglich verbunden. Dies hat den Vorteil, dass die Federeinrichtung so ausgebildet sein kann, dass sie das Ausgabeelement bezüglich des Gehäuses ohne Einwirkung äußerer Kräfte wieder in eine neutrale Ausgangsposition zurück bewegt. Bei der Federeinrichtung handelt es sich dabei bevorzugt um eine Spiralfeder, beispielsweise eine zylindrische, kegelige oder flache Spiralfeder.

Vorzugsweise ist das Ausgabeelement ausschließlich über die Federeinrichtung mit dem Gehäuse verbunden, da hierdurch zum einen eine stufenlose und reibungslose Bewegung zwischen dem Ausgabeelement und dem Gehäuse möglich ist. Ein weiterer Vorteil liegt darin, dass die Federeinrichtung so ausgebildet sein kann, dass der Benutzer bei Ansteigen der Auslenkung zur neutralen Position zwischen Gehäuse und Ausgabeelement eine immer größer werdende Rückstellkraft wahrnimmt und somit ein haptisches Feedback über die Stärke seiner Betätigung erhält.

Die Begrenzung der Bewegung zwischen Ausgabeelement und Gehäuse kann alleine durch die Federeinrichtung gegeben sein. Vorzugsweise sind jedoch entsprechende Anschläge vorgesehen, welche die Bewegung zwischen Ausgabeelement und Gehäuse begrenzen.

Bei weiteren bevorzugten Ausführungsformen des erfindungsgemäßen Systems weist die Eingabeeinheit zur Erzeugung von Steuersignalen für die Verarbeitungseinheit zur Beeinflussung der auf der Ausgabeoberfläche dargestellten Bildinformationen ein drehbares zweites Betätigungselement aufweist, wobei das zweite Betätigungselement als am Umfang der Ausgabeoberfläche angeordnetes, diese abschnittsweise umgebendes Ringsegment oder als die Ausgabeoberfläche umgebender Ring ausgebildet ist.

Die Gestaltung des zweiten Betätigungselements, das vorzugsweise zwei Drehrichtungen aufweist, ermöglicht eine sehr einfache und intuitive Bedienung, da der Nutzer in der Regel an die Verwendung von solchen drehbaren Betätigungselementen gewöhnt ist. Die Anordnung des zweiten Betätigungselements am Umfang der Ausgabeoberfläche bewirkt weiterhin, dass der Nutzer zum einen seinen Blick auch bei Betätigung des Betätigungselements so gut wie nicht von der Ausgabeoberfläche abwenden muss. Zudem ist es möglich, durch eine entsprechende Markierung auf dem zweiten Betätigungselement die Position des Betätigungselements einer bestimmten Eingabeposition bzw. Eingabe zuzuordnen. Zum anderen ermöglicht die erfindungsgemäße Konfiguration eine besonders kompakte und damit platzsparende Anordnung.
Insbesondere ist es auch möglich, durch die Drehbewegung des zweiten Betätigungselements das dargestellte Bild zu drehen oder zu bewegen, wobei auch die Drehgeschwindigkeit in die Darstellung der Bildinformation einfließen kann. So kann beispielsweise die Darstellung eines mit Wasser gefüllten Glases durch eine Drehung des zweiten Betätigungselements gedreht werden, wobei je nach der Geschwindigkeit der Drehung des zweiten Betätigungselements eine mehr oder weniger starke Bewegung der Wasseroberfläche erzeugt wird. Es versteht sich, dass hierbei dann auch eine entsprechende Einrichtung zur Erfassung der Drehgeschwindigkeit gegebenenfalls auch der Drehbeschleunigung des zweiten Betätigungselements vorgesehen ist.

Diese Ausgestaltung mit einem zweiten Betätigungselement lässt sich in besonders vorteilhafter Weise mit dem oben genannten System kombinieren, sie repräsentiert jedoch einen eigenständigen Erfindungsgedanken, der die oben genannte Aufgabe für sich ebenfalls löst. Durch das Drehen des zweiten Betätigungselements bezüglich der Ausgabeoberfläche ist eine besonders einfache und intuitive Steuerung bzw. Beeinflussung der auf der Ausgabeoberfläche ausgegebenen Bildinformationen möglich.

Das zweite Betätigungselement ist bevorzugt im wesentlichen in der Ebene der Ausgabeoberfläche angeordnet, da es hiermit möglich ist, bei enger Zuordnung des zweiten Betätigungselements zur Ausgabeoberfläche eine Vielzahl von durch den Nutzer ohne weiteres einsehbaren Markierungen auf und zusätzlich oder alternativ im Umfeld des zweiten Betätigungselements vorzusehen, welche dem Nutzer die Art der Beeinflussung der auf der Ausgabeoberfläche dargestellten Bildinformation anzeigen. So ist beispielsweise möglich, eine entsprechende Skalierung auf dem zweiten Betätigungselement selbst, auf einem angrenzenden Gehäusebereich oder aber auch auf der Anzeigeoberfläche vorzusehen bzw. darzustellen, die einen Hinweis auf die Art der Beeinflussung bei entsprechender Drehrichtung geben.

Zudem ergibt sich durch die Bewegung des zweiten Betätigungselements in der Ebene der Ausgabeoberfläche die Möglichkeit einer besonders intuitiven Steuerung eines auf der Ausgabeoberfläche dargestellten Cursors etc., die der Steuerung bzw. Eingabe bei der Verwendung von berührungsempfindlichen Displays zumindest sehr nahe kommt.

Die Ausgabeeinheit ist bevorzugt in einem Gehäuse mit einer an die Ausgabeoberfläche anschließenden Vorderwandung und wenigstens einer quer zu dieser Vorderwandung verlaufenden Seitenwandung angeordnet. Das Betätigungselement kann dabei wenigstens einen Teil der Vorderwandung dieses Gehäuses bilden. Alternativ kann es auch wenigstens einen Teil der Seitenwandung bilden. Vorzugsweise bildet das Betätigungselement sowohl einen Teil der Vorderwandung als auch einen Teil der Seitenwandung, da es bei einer solchen Konfiguration besonders leicht zugänglich ist und daher einfach bedient werden kann. Dies ist insbesondere bei Geräten mit geringer Baugröße, beispielsweise Mobiltelefonen oder dergleichen, von besonderem Vorteil. Weiter vorzugsweise bildet das zweite Betätigungselement dabei wenigstens einen Teil einer Gehäusekante.

Das zweite Betätigungselement ist in entsprechender Weise an bzw. in dem Gehäuse gelagert bzw. geführt. Eine besonders leichte Betätigung ergibt sich, wenn das Betätigungselement durch eine Kugel- oder Rollenlagerung gelagert bzw. geführt ist. Es versteht sich dabei im Übrigen, dass das zweite Betätigungselement nicht unbedingt um 360° oder mehr drehbar sein muss. Es kann vorgesehen sein, dass das zweite Betätigungselement auch nur um einen Drehwinkel unterhalb von 360° drehbar ausgebildet ist.

Bei besonders vorteilhaften Varianten des erfindungsgemäßen Systems ist wenigstens eine Zeigereinrichtung vorgesehen, die zur Beeinflussung der auf der Ausgabeoberfläche dargestellten Bildinformation in Abhängigkeit von ihrer Position durch Betätigen des Betätigungselements in ihrer Position veränderbar ist. Die Zeigereinrichtung kann dabei an oder auf dem Betätigungselement selbst vorgesehen sein. Bevorzugt wird sie zusätzlich oder alternativ so auf der Ausgabeoberfläche dargestellt, dass sie in der Position mit der Betätigung des jeweiligen Betätigungselements ändert. Hierzu ist die Verarbeitungseinrichtung zur Darstellung der Zeigereinrichtung auf der Ausgabeoberfläche in Abhängigkeit von der Position des jeweiligen Betätigungselements ausgebildet. Hierdurch ist es in besonders einfacher Weise möglich, bestimmte Bereiche, beispielsweise Piktogramme oder dergleichen, auf der Ausgabeoberfläche anzusteuern, um die auf der Ausgabeoberfläche dargestellte Bildinformation zu beeinflussen.

Die Erfassung der Drehposition des zweiten Betätigungselements kann in vielfacher bekannter Weise erfolgen. So ist beispielsweise eine entsprechende Rastung mit Schleifkontakten oder dergleichen möglich. Ebenso ist es möglich eine entsprechende Taktscheibe oder dergleichen vorzusehen. Bevorzugt weist die Eingabeeinheit mindestens eine optische Erfassungseinrichtung zur Erfassung der Drehposition des zweiten Betätigungselements auf. Hierzu kann ein entsprechender Kodierstreifen oder dergleichen mit wenigstens einer optischen Abtasteinrichtung, beispielsweise einer Gabelichtschranke oder eine Reflexlichtschranke, zusammenwirken. Dabei kann die optische Abtasteinrichtung entweder fest installiert sein oder mit dem zweiten Betätigungselement so verbunden sein, dass sie mit diesen mitgedreht wird.

Bei bevorzugten Varianten des erfindungsgemäßen Systems ist vorgesehen, dass das jeweilige Betätigungselement wenigstens abschnittsweise eine die Betätigung erleichternde Oberfläche aufweist. Hierbei kann es sich beispielsweise um eine die Griffigkeit der Oberfläche erhöhende geriffelte oder genoppte Oberfläche handeln. Ebenso kann es sich um eine elastische Oberfläche handeln, die eine ähnliche Erhöhung der Griffigkeit mit sich bringt.

Weitere bevorzugte Varianten des erfindungsgemäßen Systems zeichnen sich dadurch aus, dass die Eingabeeinheit zum Auslösen eines Steuersignals durch Ausüben wenigstens eines Druckkraftimpulses auf das jeweilige Betätigungselement ausgebildet ist. Hierdurch ist es beispielsweise möglich, ein bestimmtes Piktogramm oder dergleichen auf der Ausgabeoberfläche mit dem Betätigungselement anzusteuern und dann erst, durch einen entsprechenden Druck auf das jeweilige Betätigungselement das entsprechende Steuersignal auszulösen. Es versteht sich jedoch, dass mit einer solchen Variante auch zusätzliche, d. h. andere Steuersignalen ausgelöst werden können.

Zum Auslösen des Steuersignals kann beispielsweise in das jeweilige Betätigungselement ein entsprechender Betätigungsknopf oder dergleichen integriert sein. Weiterhin kann das Betätigungselement selbst oder ein Teil des jeweiligen Betätigungselements nach Art einer Maustaste federnd gelagert bzw. ausgebildet sein und es können ein oder mehrere entsprechende Kontakte vorgesehen sein, der bzw. die bei Ausübung eines Druckkraftimpulses auf das jeweilige Betätigungselement bzw. den entsprechenden Teil des jeweiligen Betätigungselements betätigt werden.

Vorzugsweise weist das jeweilige Betätigungselement wenigstens ein druckempfindliches Auslöseelement zum Auslösen des Steuersignals auf. Dieses kann beispielsweise nach Art eines Folienschalters ausgebildet sein, wie er aus Folientastaturen bekannt ist. Diese Variante ermöglicht eine besonders einfache und robuste Gestaltung des Betätigungselements.

Weiter vorzugsweise weist das jeweilige Betätigungselement eine wenigstens im Bereich des Auslöseelements elastische Abdeckung des Auslöseelements auf, die wenigstens einen Teil der Betätigungsoberfläche des Betätigungselements bildet. Hierdurch ist ein einfacher und guter Schutz für das Auslöseelement vor Verschmutzung und Beschädigung gewährleistet.

Bei bevorzugten Weiterbildungen des erfindungsgemäßen Systems wird eine der Ansteuerung über das zweite Betätigungselement vergleichbare Ansteuerung dadurch erzielt, dass das Ausgabeelement bezüglich des Gehäuses drehbar gelagert ist. Bevorzugt geschieht dies dadurch, dass das Ausgabeelement bezüglich einer die Verbindung zwischen Ausgabeelement und Gehäuse darstellenden Federeinrichtung drehbar gelagert ist. Alternativ kann diese Federeinrichtung bezüglich des Gehäuses drehbar sein, d. h. die Federeinrichtung drehbar am Gehäuse angeordnet sein. Hierbei sind dann analog zur Gestaltung des zweiten Betätigungselements entsprechende Sensoren oder dergleichen vorgesehen, welche die Drehung zwischen Ausgabeelement und Gehäuse erfassen und entsprechende Signale an die Verarbeitungseinheit weitergeben.

Es versteht sich jedoch, dass einer solchen Variante mit bezüglich des Gehäuses drehbarem Ausgabeelement auch vorgesehen sein kann, dass bei der Bildverarbeitung der von der Bildaufnahmeeinrichtung aufgenommenen Bilder die Drehposition zwischen der Bildaufnahmeeinrichtung und der Kodiereinrichtung erfasst wird und damit eine dieser Drehposition entsprechende Ansteuerung der Ausgabe auf der Ausgabeoberfläche erzeugt wird. So kann die Bildverarbeitung hierzu beispielsweise erfassen, in welcher Position, insbesondere Drehposition, sich bestimmte Farbwerte oder Graustufen bezüglich eines der Bildaufnahmeeinrichtung fest zugeordneten Koordinatensystems befinden.

Die vorliegende Erfindung betrifft weiterhin eine entsprechend ausgestaltete Ausgabeeinheit zur Ausgabe von Bildinformationen, die insbesondere für im Zusammenhang mit einem erfindungsgemäßen System ihren Einsatz finden kann. Die Ausgabeeinheit weist ein Gehäuse und einer Ausgabeeinheit mit einer Ausgabeoberfläche zur Ausgabe von Bildinformationen auf. Weiterhin ist eine Eingabeeinheit zur Erzeugung von Steuersignalen für eine Verarbeitungseinheit zur Steuerung der Ausgabe der Bildinformationen vorgesehen, wobei die Steuersignale zur Beeinflussung der auf der Ausgabeoberfläche dargestellten Bildinformationen dienen und die Eingabeeinheit wenigstens ein Betätigungselement aufweist. Erfindungsgemäß ist dabei das Ausgabeelement zur Ausbildung des Betätigungselements bezüglich des Gehäuses beweglich angeordnet.

Bei bevorzugten Weiterbildungen der Erfindung umfasst die Ausgabeeinheit eine Ausgabeoberfläche zur Ausgabe von Bildinformationen und wenigstens eine Eingabeeinheit zur Erzeugung von Steuersignalen für eine Verarbeitungseinheit zur Steuerung der Ausgabe der Bildinformationen. Die Steuersignale dienen dabei zur Beeinflussung der auf der Ausgabeoberfläche dargestellten Bildinformationen. Weiterhin weist die Eingabeeinheit ein drehbares Betätigungselement auf. Erfindungsgemäß ist das Betätigungselement als am Umfang der Ausgabeoberfläche angeordnetes, diese abschnittsweise umgebendes Ringsegment oder als die Ausgabeoberfläche umgebender Ring ausgebildet.

Mit der erfindungsgemäßen Ausgabeeinheit werden die oben zu dem erfindungsgemäßen System geschilderten Vorteile in gleicher Weise ermöglicht. Bei der Ausgabeeinheit kann es sich beispielsweise um einen Monitor, ein Display oder dergleichen handeln, der bzw. das mit einer entsprechenden Verarbeitungseinheit, beispielsweise einem herkömmlichen Computer, verbunden werden kann.

Weitere bevorzugte Ausgestaltungen der vorliegenden Erfindung ergeben sich aus den Unteransprüchen sowie der nachstehenden Beschreibung bevorzugter Ausführungen unter Bezugnahme auf die beigefügten Zeichnungen. Es zeigen:
- Figur 1: eine Schnittansicht eines bevorzugten Ausführungsbeispiels des erfindungsgemäßen Systems;
- Figur 2a bis 2e: eine Vorderansicht und Seitenansichten des erfindungsgemäßen Systems aus Figur 1.

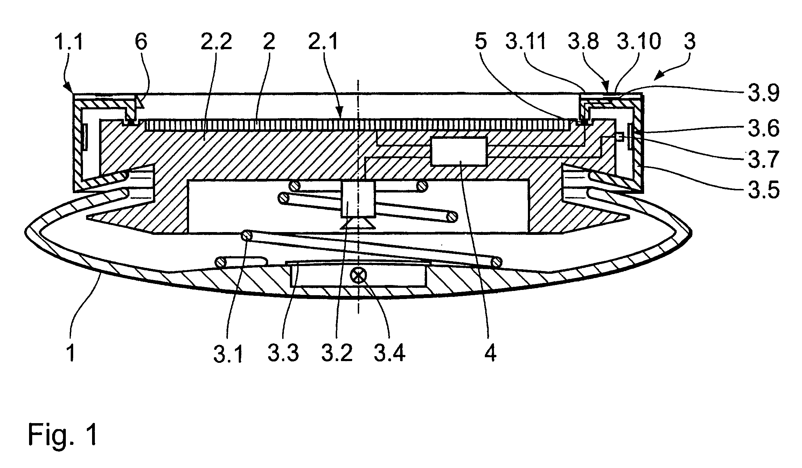

Die Figur 1 zeigt einen Schnitt durch ein bevorzugtes Ausführungsbeispiel des erfindungsgemäßen Systems in Form einer Ausgabeeinheit mit einem Gehäuse 1 und einem Ausgabeelement 2.2, welches ein Display 2 mit einer Ausgabeoberfläche 2.1 umfasst, sowie einer Eingabeeinheit 3 zur Erzeugung von Steuersignalen für eine Verarbeitungseinheit 4. Die Verarbeitungseinheit 4 steuert dabei die Ausgabe der Bildinformationen auf dem mit ihr verbundenen Display 2.

Das Ausgabeelement 2.2 ist über eine kegelige Spiralfeder 3.1 mit dem Gehäuse 1 verbunden, sodass das Ausgabeelement 2.2 zur Ausbildung eines ersten Betätigungselements der Eingabeeinheit 3 bezüglich des Gehäuses 1 frei in beliebige Richtungen beweglich ist. Die Bewegung des Ausgabeelements 2.2 gegenüber dem Gehäuse 1 ist dabei durch entsprechende Anschläge an dem Gehäuse 1 bzw. dem Ausgabeelement 2.2 beschränkt.

Die Bewegung des Ausgabeelements 2.2 bezüglich des Gehäuses 1 wird über eine Sensoreinrichtung erfasst, die von einer mit dem Ausgabeelement 2.2 verbundenen Bildaufnahmeeinrichtung in Form eines CCD-Kameramodules 3.2 gebildet ist. Diesem Kameramodul 3.2 ist eine an einer konvexen Oberfläche des Gehäuses 1 angeordnete Kodiereinrichtung in Form einer zweidimensionalen Farbskala 3.3 zugeordnet.

Die Farbskala 3.3 ist nach Art einer Farbwahlskala ausgebildet, wie sie beispielsweise von Bildbearbeitungsprogrammen her bekannt ist. Auf der Farbskala 3.3 ist ein Farbspektrum kreisförmig zum Mittelpunkt der Fläche angeordnet. Der Mittelpunkt der Fläche ist als in sich geschlossene weiße Fläche entsprechend großer Ausdehnung ausgebildet.

Bei einer Farbskala 3.3 variiert die Helligkeit der einzelnen Farbwerte in radialer Richtung, sodass die Farbwerte nach außen in die dunklen Farbwerte gehen, während die nach innen ins Weiß neutralisiert werden. Hierdurch erfolgt eine Durchschattierung einer RGB- oder CMYK-Skala von innen nach außen.

Die Farbskala 3.3 ist durch eine Lichtquelle 3.4 bezüglich des Kameramoduls 3.2 von hinten beleuchtet, um eine ausreichend gute und kontrastreiche Abbildung der Farbskala 3.3 im Kameramodul 3.2 zu erzielen. Es versteht sich, dass bei anderen Varianten auch eine andere Beleuchtung der Kodiereinrichtung vorgesehen sein kann, insbesondere kann die Beleuchtung auch von der Seite des Kameramoduls her erfolgen. Beispielsweise kann auch die gegebenenfalls ohnehin vorgesehene Beleuchtung für das Display genutzt werden. Ebenso kann durch ein entsprechend transparentes Gehäuse ein ausreichender Lichteinfall auf der Kodiereinrichtung sichergestellt sein.

Wird das Ausgabeelement 2.2 bezüglich des Gehäuses 1 bewegt, erfasst das Kameramodul 3.2 ein der aktuellen Position des Ausgabeelements 2.2 bezüglich des Gehäuses 1 entsprechendes Bild von der Farbskala 3.3, welches von demjenigen anderer Positionen abweicht. Dieses Bild wird von dem Kameramodul 3.2 an die Verarbeitungseinheit 4 weitergegeben und bildet ein Steuersignal für die Verarbeitungseinheit 4, welche durch eine entsprechende Bildverarbeitung aus diesem Bild eine der Relativposition zwischen Ausgabeelement 2.2 und Gehäuse 1 entsprechende Veränderung der auf der Ausgabeoberfläche 2.1 ausgegebenen Bildinformation bewirkt.

Hierbei werden mit anderen Worten je nachdem, welche Bildinformation das Kameramodul 3.2 von der Farbskala 3.3 aufnimmt, unterschiedliche Steuersignale für die Verarbeitungseinheit erzeugt, um so die Ausgabe auf der Ausgabeoberfläche in Abhängigkeit von der Position des Ausgabeelements bezüglich des Gehäuses zu steuern. Sämtliche Bewegungen des Ausgabeelements bezüglich des Gehäuses können dabei durch das Kameramodul 3.2 erfasst werden.

Hierbei können beliebig feine oder grobe Auflösungen gewählt sein, je nachdem wie unmittelbar die Steuerung der Bildausgabe auf der Ausgabeoberfläche auf eine Bewegung des Ausgabeelements 2.2 bezüglich des Gehäuses 1 ansprechen soll. Es kann zum einen vorgesehen sein, dass die Kodiereinrichtung entsprechend große Bereiche mit gleich bleibendem Farb- und Helligkeitswert aufweist, sodass das Kameramodul 3.2 in einem bestimmten eingeschränkten Bewegungsbereich des Ausgabeelements 2.2 bezüglich des Gehäuses 1 eine im wesentlichen gleich bleibende Bildinformation aufnimmt.

Zusätzlich oder alternativ kann aber auch die Bildverarbeitung der durch das Kameramodul 3.2 aufgenommenen Bilder in der Verarbeitungseinrichtung 4 so erfolgen, dass erst bei einem entsprechend großen Unterschied zwischen den aufgenommenen Bildern unterschiedliche Steuersignale für die Ansteuerung der Ausgabe auf der Ausgabeoberfläche 2.1 erzeugt werden.

Die Eingabeeinheit 3 umfasst als weiteres, zweites Betätigungselement einen in beide Richtungen drehbar an dem Ausgabeelement 2.2 gleitgelagerten Ring 3.5, der das Display 2 umgibt. Der Ring 3.5 ist etwa in der Ebene des Displays 2 drehbar angeordnet. Zur Erzeugung von Steuersignalen für die Verarbeitungseinheit 4 weist die Eingabeeinheit 3 einen an dem Ring 3.5 angeordneten Codierstreifen 3.6 auf, der mit einem am Ausgabeelement 2.2 angebrachten optischen Sensor 3.7 zusammenwirkt, um die Drehposition des Ringes 3.5 bezüglich des Ausgabeelements 2.2 zu bestimmen.

Zum Auslösen eines Steuersignals für die Verarbeitungseinheit 4 durch einen Druckkraftimpuls auf den Ring 3.5 weist die Eingabeeinheit 3 weiterhin ein druckempfindliches Auslöseelement 3.8 auf, das über einen Schleifkontakt 5 mit der Verarbeitungseinheit 4 verbunden ist.

Das Auslöseelement 3.8 ist nach Art eines Folienschalters ausgebildet, wobei es ein erstes ringförmiges Kontaktelement 3.9 umfasst, das auf dem Ring 3.5 angeordnet ist, und ein zweites ringförmiges Kontaktelement 3.10 umfasst, das auf der Innenseite einer elastischen Abdeckung 3.11 des Ringes 3.1 angeordnet ist. Wird eine Druckkraft auf die elastische Abdeckung 3.11 ausgeübt, so wird der Kontakt zwischen den Kontaktelementen 3.9 und 3.10 geschlossen und ein entsprechendes Auslösesignal für das Steuersignal, das sich nach der Position des Ringes 3.4 des Ausgabeelements 2.2 bestimmt, erzeugt.

Es versteht sich, dass bei anderen Varianten des erfindungsgemäßen Systems auch vorgesehen sein kann, dass das durch die Relativposition zwischen Ausgabeelement und Gehäuse bedingte Steuersignal ebenfalls erst durch Betätigung dieses bzw. eines entsprechenden Auslöseelements ausgelöst wird.

Die elastische Abdeckung 3.11 weist eine gummierte Oberfläche auf, welche die Betätigung des Rings 3.5 durch eine erhöhte Reibung mit den Fingern eines Nutzers erleichtert.

Der Ring 3.5 bildet die Vorderwandung sowie eine Seitenwandung, welche das Gehäuse 1 fortsetzt, wobei er zudem eine Kante 1.1 bildet. Hierdurch ist der Ring 3.5 sowohl von vorne als auch von der Seite gut zugänglich und kann daher einfach bedient werden.

Am Ring 3.5 ist eine Zeigereinrichtung in Form eines Zeigers 6 vorgesehen. Die Beeinflussung der auf der Ausgabeoberfläche 2.1 dargestellten Bildinformation erfolgt dabei in Abhängigkeit von der Position des Zeigers 6, der durch Betätigen des Ringes 3.5 in seiner Position veränderbar ist. Die Position des Zeigers 6 wird über die Drehposition des Ringes 3.5 bezüglich der Ausgabeeinheit 2.2 ermittelt.

Mit dem Zeiger 6 können dabei beispielsweise auf der Ausgabeoberfläche 2.1 dargestellte Piktogramme ausgewählt werden und die mit diesen Piktogrammen verbundenen Steuersignale für die Verarbeitungseinheit 4 dann durch einen Druckkraftimpuls auf die Abdeckung 3.7 des Ringes 3.5 ausgelöst werden. Ebenso ist es möglich auf der Ausgabeoberfläche 2.1 eine entsprechende Skala oder dergleichen darzustellen, wobei dann je nach Position des Zeigers 6 bezüglich dieser Skala entsprechende Steuersignale erzeugt werden.

Im gezeigten Beispiel ist das Gehäuse 1 linsenförmig ausgebildet. Es versteht sich jedoch, dass die vorliegende Erfindung auch in Zusammenhang mit anderen Gehäuseformen in vorteilhafter Weise eingesetzt werden kann. So kann das Gehäuse beispielsweise auch tonnenförmig oder zylinderförmig sein. Insbesondere lässt sich die vorliegende Erfindung auf Grund der mit ihr möglichen kompakten Bauweise vorteilhaft für sehr kleinbauende Geräte einsetzen.

Im gezeigten Beispiel ist weiterhin das zweite Betätigungselement als durchgehender Ring 3.5 ausgebildet. Es versteht sich jedoch, dass für das Betätigungselement auch nur ein Ringsegment vorgesehen sein kann, das die Ausgabeeinheit dann nicht vollständig, sondem nur zu einen Teil umgibt. Dieses Ringsegment kann in derselben Weise wie der beschriebene durchgehende Ring gelagert sein. Bevorzugt ist dann jedoch eine Abdeckung durch das Gehäuse vorgesehen, so dass nur ein Teil des Ringsegments zur Betätigung zugänglich ist.

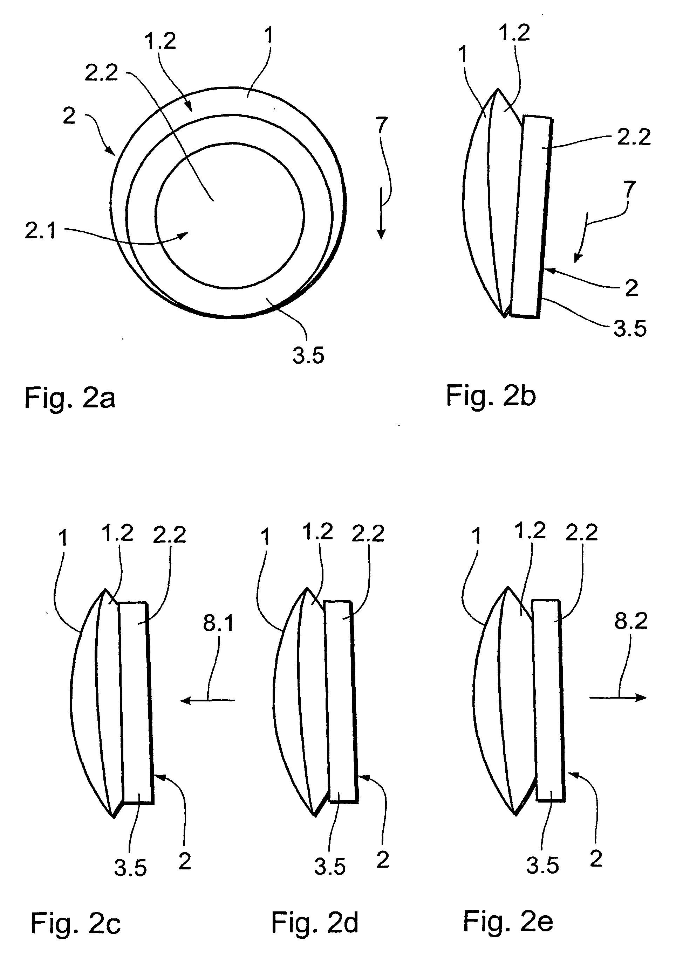

Die Figuren 2a bis 2e zeigen Ansichten des Ausführungsbeispiels aus Figur 1.

Durch die über die Feder 3.1 realisierte Befestigung des Ausgabeelements 2.2 an dem Gehäuse 1 ist das Ausgabeelement 2.2 der Ausgabeeinheit 2 nach Art eines Joysticks beweglich an Gehäuse 1 angeordnet, sodass das Ausgabeelement 2.2 beispielsweise entlang eines Pfeils 7 bezüglich des Gehäuses 1 nach bewegt werden kann, wie dies den Figuren 2a und 2b zu entnehmen ist.

Das Ausgabeelement 2.2 bildet dabei wie erwähnt neben dem drehbaren Ring 3.5 ein Betätigungselement für die Eingabeeinheit zur Erzeugung der Steuersignalen für die - in den Figuren 2a bis 2e nicht dargestellte - Verarbeitungseinheit 4 zur Beeinflussung der auf der Ausgabeoberfläche 2.1 dargestellten Bildinformationen.

Dank dieser Lagerung nach Art eines Joysticks kann das Ausgabeelement 2.2 in beliebigen Richtungen bezüglich des Gehäuses 1 in der beschriebenen Weise entlang der konvexen Oberfläche 1.2 des Gehäuses 1 verschwenkt werden

Die Lagerung des Ausgabeelements bezüglich des Gehäuses kann bei anderen Varianten der Erfindung aber auch nach Art eines Kugelgelenks realisiert sein, so dass das Ausgabeelement in beliebigen Richtungen bezüglich des Gehäuses in der beschriebenen Weise entlang Oberfläche des Gehäuses verschwenkt werden kann. Es versteht sich jedoch, dass bei anderen Ausführungen auch weitere andere Lagerungsvarianten gewählt werden können. So können beispielsweise zwei zueinander senkrechte Schwenkachsen oder dergleichen vorgesehen sein.

Das Ausgabeelement 2.2 ist durch die Feder 3.1 so gelagert, dass es ohne die Einwirkung einer Betätigungskraft in eine Mittenposition, die in Figur 2d dargestellt ist, zurückkehrt. Hierbei kann durch entsprechende - nicht dargestellte - Rastmittel bewirkt sein, dass das Ausgabeelement 2.2 in dieser Mittenposition leicht einrastet.

Eine solche federnde Aufhängung, beispielsweise durch eine entsprechende Spiralfeder oder mehrere Federn, kann auch in Verbindung mit anderen Lagerungsvarianten vorgesehen sein.

Die Schwenkbewegung und die Auslenkung des Ausgabeelements 2.2 wird in der oben beschriebenen Weise über das Kameramodul 3.2 erfasst. Es versteht sich jedoch, dass diese anderen Varianten auch in beliebiger anderer, bekannter Weise durch optische Sensoren erfasst. Es versteht sich jedoch, dass je nachdem, ob lediglich die Betätigung oder auch die Auslenkung des Ausgabeelements erfasst werden soll, hierfür auch beliebige andere Sensoren oder aber auch einfache Schalter oder dergleichen verwendet werden können.

Die Bewegung des Ausgabeelements 2.2 bezüglich des Gehäuses 1 beeinflusst die auf der Ausgabeoberfläche 2.1 dargestellte Bildinformation. So wird im gezeigten Beispiel das auf der Ausgabeoberfläche 2.1 dargestellte Bild entsprechend der Auslenkung des Ausgabeelements 2.2 verschoben. Je nachdem, wie stark die Auslenkung des Ausgabeelements 2.2 gegenüber der Mittenposition ist, desto schneller geht die Verschiebung des Bildes von sich. Es versteht sich jedoch, dass auch beliebige andere Steuerungsfunktionen durch das Auslenken des Ausgabeelements realisiert sein können.

Hierdurch können beispielsweise Bildinformationen, wie Landkarten etc., die zu groß sind, um auf dem Display 2 dargestellt zu werden, in einfache Weise von dem Benutzer eingesehen werden.

Wie den Figuren 2c bis 2e zu entnehmen ist, ist das Ausgabeelement 2.2 weiterhin senkrecht zu seiner Ausgabeoberfläche 2.1 bezüglich des Gehäuses 1 in Richtung des Pfeils 8.1 bzw. des Pfeils 8.2 verschieblich. Hierdurch wird ebenfalls die auf der Ausgabeoberfläche 2.1 dargestellte Bildinformation beeinflusst. So wird durch ein Drücken der Ausgabeeinheit 2.2 in Richtung des Pfeils 8.1 ein Vergrößern des auf der Ausgabeoberfläche 2.1 dargestellten Bildes erzielt, während einen Ziehen der Ausgabeeinheit 2.2 in Richtung des Pfeils 8.2 ein Verkleinem des auf der Ausgabeoberfläche 2.1 dargestellten Bildes bewirkt. Es versteht sich jedoch, dass auch hier beliebige andere Steuerungsfunktionen durch das Ziehen bzw. Drücken des Ausgabeelements realisiert sein können.

Auch diesbezüglich ist die durch die Feder 3.1 realisierte Lagerung der Ausgabeeinheit 2.2 so ausgebildet, dass es ohne die Einwirkung einer Betätigungskraft in die in Figur 2d dargestellte Mittenposition zurückkehrt und in dieser gegebenenfalls leicht einrastet. Auch hierzu kann bei anderen Varianten wieder eine entsprechende federnde Lagerung, beispielsweise durch mehrere Federn, vorgesehen sein.

Die Feder 3.1 ist im gezeigten Beispiel so ausgebildet, dass der Benutzer bei Ansteigen der Auslenkung zur in Figur 2d dargestellte neutralen Mittenposition zwischen Gehäuse 1 und Ausgabeelement 2.2 eine immer größer werdende Rückstellkraft wahrnimmt und somit ein haptisches Feedback über die Stärke seiner Betätigung erhält. Es versteht sich jedoch, dass die Feder bei anderen Varianten der Erfindung auch so ausgebildet sein kann, dass sich keine nennenswerte Veränderung der Rückstellkräfte über den Auslenkungsbereich ergibt.

Im gezeigten Beispiel ist die Steuerung so ausgebildet, dass Steuersignale gleichzeitig durch eine Auslenkung der Ausgabeeinheit 2.2 und durch eine Betätigung des Drehringes 3.5 erzeugt werden können. Es versteht sich jedoch, dass bei anderen Varianten die Steuerung so ausgebildet sein kann, dass die Steuersignale nur getrennt voneinander erzeugt werden können. Mit anderen Worten kann eine Eingabe durch Betätigung des Drehringes nicht möglich sein, kann eine Eingabe durch Betätigung des Drehringes nicht möglich sein, wenn die Ausgabeeinheit bezüglich ihrer Mittenposition ausgelenkt ist, und umgekehrt. Hierzu könnte beispielsweise die Betätigung des Drehringes blockiert sein, wenn die Ausgabeeinheit bezüglich ihrer Mittenposition ausgelenkt ist.

## Patentansprüche

1. System zur Bildwiedergabe mit einer Ausgabeeinheit, die ein Gehäuse (1') und ein Ausgabeelement (2.2) mit einer Ausgabeoberfläche (2.1) zur Ausgabe von Bildinformationen aufweist, einer damit verbundenen Verarbeitungseinheit (4) zur Steuerung der Ausgabe der Bildinformationen sowie wenigstens einer mit der Verarbeitungseinheit (4) verbundenen Eingabeeinheit (3) zur Erzeugung von Steuersignalen für die Verarbeitungseinheit (4) zur Beeinflussung der auf der Ausgabeoberfläche (2.1) dargestellten Bildinformationen, die wenigstens ein erstes Betätigungselement aufweist, **dadurch gekennzeichnet, dass** das Ausgabeelement (2.2) zur Ausbildung des ersten Betätigungselements bezüglich des Gehäuses (1) beweglich angeordnet ist.

2. System nach Anspruch 1, **dadurch gekennzeichnet, dass** das Ausgabeelement (2.2) nach Art eines Joysticks bezüglich des Gehäuses (1) verschwenkbar ist.

3. System nach Anspruch 1 oder 2, **dadurch gekennzeichnet, dass** das Ausgabeelement (2.2) im wesentlichen senkrecht und/oder im wesentlichen parallel zur Ausgabeoberfläche (2.1) bezüglich des Gehäuses (1) verschieblich angeordnet ist.

4. System nach einem der vorhergehenden Ansprüche, **dadurch gekennzeichnet, dass** eine mit der Verarbeitungseinheit (4) verbundene Bildaufnahmeeinrichtung (3.2) und eine der Bildaufnahmeeinrichtung (3.2) zugeordnete Kodiereinrichtung (3.3) vorgesehen sind, wobei die Bildaufnahmeeinrichtung (3.2) an dem Ausgabeelement (2.2) und die Kodiereinrichtung (3.3) an dem Gehäuse (1) angeordnet ist oder die Bildaufnahmeeinrichtung (3.2) an dem Gehäuse (1) und die Kodiereinrichtung (3.3) an dem Ausgabeelement (2.2) angeordnet ist und wobei die Bildaufnahmeeinrichtung (3.2) und die Kodiereinrichtung (3.3) zum Erzeugen von Steuersignalen für die Verarbeitungseinheit (4) in Abhängigkeit von der Position des Ausgabeelementes (2.2) bezüglich des Gehäuses (1) derart ausgebildet und angeordnet sind, dass die Bildaufnahmeeinrichtung (3.2) in Abhängigkeit von der Position des Ausgabeelementes (2.2) bezüglich des Gehäuses (1) unterschiedliche Bildinformationen von der Kodiereinrichtung (3.3) aufnimmt.

5. System nach Anspruch 4, **dadurch gekennzeichnet, dass** die Kodiereinrichtung (3.3) nach Art einer zweidimensionalen Farb- oder Graustufenskala ausgebildet ist.

6. System nach einem der vorhergehenden Ansprüche, **dadurch gekennzeichnet, dass** das Ausgabeelement (2.2) mit dem Gehäuse (1) über eine Federeinrichtung (3.1), insbesondere eine Spiralfeder, beweglich verbunden ist.

7. System nach einem der vorhergehenden Ansprüche, **dadurch gekennzeichnet, dass** die Eingabeeinheit (3) zur Erzeugung von Steuersignalen für die Verarbeitungseinheit (4) zur Beeinflussung der auf der Ausgabeoberfläche (2.1) dargestellten Bildinformationen ein drehbares zweites Betätigungselement (3.5) aufweist, wobei das zweite Betätigungselement als am Umfang der Ausgabeoberfläche (2.1) angeordnetes, diese abschnittsweise umgebendes Ringsegment oder als die Ausgabeoberfläche umgebender Ring (3.5) ausgebildet ist.

8. System nach Anspruch 7, **dadurch gekennzeichnet, dass** das Betätigungselement (3.5) im wesentlichen in der Ebene der Ausgabeoberfläche (2.1) angeordnet ist.

9. System nach einem der vorhergehenden Ansprüche, **dadurch gekennzeichnet, dass** wenigstens eine Zeigereinrichtung (6) vorgesehen ist, die zur Beeinflussung der auf der Ausgabeoberfläche (2.1) dargestellten Bildinformationen in Abhängigkeit von ihrer Position durch Betätigen des Betätigungselements (3.5) in ihrer Position veränderbar ist.

10. System nach einem der vorhergehenden Ansprüche, **dadurch gekennzeichnet, dass** die Eingabeeinheit (3) mindestens eine optische Erfassungseinrichtung (3.6, 3.7) zur Erfassung der Drehposition des zweiten Betätigungselements (3.5) aufweist.

11. System nach einem der vorhergehenden Ansprüche, **dadurch gekennzeichnet, dass** die Eingabeeinheit (3) zum Auslösen eines Steuersignals durch Ausüben wenigstens eines Druckkraftimpulses auf das Betätigungselement (3.5) ausgebildet ist.

12. System nach Anspruch 11, **dadurch gekennzeichnet, dass** das Betätigungselement (3.5) wenigstens ein druckempfindliches Auslöseelement (3.8) zum Auslösen des Steuersignals aufweist.

13. System nach Anspruch 12, **dadurch gekennzeichnet, dass** das Betätigungselement (3.5) eine wenigstens im Bereich des Auslöseelements elastische Abdeckung (3.11) des Auslöseelements (3.8) aufweist, die wenigstens einen Teil der Betätigungsoberfläche des Betätigungselements (3.5) bildet.

## Claims

1. Image reproduction system having an output unit which comprises a housing (1) and an output element (2.2) with an output surface (2.1) for outputting image information, a processing device (4) connected therewith for controlling the output of the image information, and at least one input device (3) for generating control signals for the processing device (4) for influencing the image information displayed on the output surface (2.1), the input device comprising at least one an activation element, **characterized in that** the output element (2.2) is arranged movably relative to the housing (1) so to form the first activation element.

2. System according to claim 1, **characterized in that** the output element (2.2) can be deviated relative to the housing (1) according to the type of joystick.

3. System according to claim 1 or 2, **characterized in that** the output element (2.2) is arranged movably relative to the housing (1) in a substantially vertical and/ or a substantially parallel manner.

4. System according to one of the preceding claims, **characterized in that** there are provided an image capturing means (3.2) being connected to the processing device (4) and an encoding means (3.3) being dedicated to the image capturing means (3.2), wherein the image capturing means (3.2) is arranged at the output element (2.2) and the encoding means (3.3) is arranged at the housing (1), or wherein the image capturing means (3.2) is arranged at the housing (1) and the encoding means (3.3) is arranged at the output element (2.2), and wherein the image capturing means (3.2) and the encoding means (3.3) are configured for the generation of control signals for the processing device (4) depending on the position of the output element (2.2) relative to the housing (1) and are arranged in a manner, that the image capturing means (3.2) gathers different image information from the encoding means (3.3) depending on the position of the output element (2.2) relative to the housing (1).

5. System according to claim 4, **characterized in that** the encoding means (3.3) is configured according to the type of a two-dimensional colour- or greyscales chart.

6. System according to one of the preceding claims, **characterized in that** the output element (2.2) is movably connected to the housing (1) via a spring means (3.1), in particular via a spiral spring.

7. System according to one of the preceding claims, **characterized in that** the input device (3) for generating control signals for the processing device (4) for influencing the image information displayed on the output surface (2.1) comprises a rotary second activation element (3.5), wherein the second activation element (3.5) is formed as a ring segment being arranged at and encircling in sections a circumference of the output surface (2.1) or is formed as a ring encircling the output surface (2.1).

8. System according to claim 7, **characterized in that** the activation means (3.5) is arranged substantially in-plane with the output surface (2.1).

9. System according to one of the preceding claims, **characterized in that** at least one indication device (6) is provided, which is displaceable in its position for influencing the image information displayed on the output surface (2.1) according to its position by activation of the activation element (3.5).

10. System according to one of the preceding claims, **characterized in that** the input device (3) comprises at least one optical detecting means (3.6, 3.7) for detecting a rotational position of the second activation element (3.5).

11. System according to one of the preceding claims, **characterized in that** the input device (3) is configured to trigger a control signal due to the exertion of a momentum on the activation element (3.5).

12. System according to claim 11, **characterized in that** the activation element (3.5) comprises at least one trigger element (3.8) sensitive to pressure for triggering the control signal.

13. System according to claim 12, **characterized in that** the activation element (3.5) comprises a cover (3.11) for the trigger element (3.8), being elastic at least in a region of the trigger element (3.8), wherein the cover (3.11) constitutes a portion of the activation surface of the activation element (3.5).

## Revendications

1. Système pour la reproduction d'images pourvu d'une unité d'affichage comportant un boîtier et un élément d'affichage avec une surface d'affichage pour l'affichage d'informations d'image, une unité de traitement relié à l'élément d'affichage pour le réglage de l'affichage des images, ainsi qu'au moins une unité d'entrée reliée à l'unité de traitement, dont la fonction est de générer des signaux de commande pour l'unité de traitement dans le but de modifier les informations d'image représentées sur la surface d'affichage ; l'unité d'entrée comportant au moins un premier élément d'activation **caractérisé par le fait que** l'élément d'affichage est laissé mobile par rapport au boîtier de manière à permettre l'intégration de l'élément d'activation.

2. Système d'après revendication 1, **caractérisé par le fait que** l'élément d'affichage peut être pivoté par rapport au boîtier à la manière d'un joystick.

3. Système d'après revendication 1 ou 2, **caractérisé par le fait que** l'élément d'affichage est disposé de manière à pouvoir être déplacé par rapport au boîtier, dans une direction principalement perpendiculaire et/ou principalement parallèle à la surface d'affichage.

4. Système d'après l'une des revendications précédentes, **caractérisé par le fait qu'**un dispositif de capture d'images relié à l'unité de traitement, ainsi qu'un dispositif de codage adjoint au dispositif de capture d'images sont prévus, sachant que le dispositif de capture d'images est fixé à l'élément d'affichage et le dispositif de codage est fixé au boîtier, ou que le dispositif de capture d'images est fixé au boîtier et le dispositif de codage est fixé à l'élément d'affichage ; et sachant que le dispositif de capture d'images et le dispositif de codage, dont la fonction est de générer des signaux de commande pour l'unité de traitement en fonction de la position de l'élément d'affichage par rapport au boîtier, sont disposés et conçus de sorte que le dispositif de capture d'images reçoive du dispositif de codage des informations d'image différant en fonction de la position de l'élément d'affichage par rapport au boîtier.

5. Système d'après revendication 4, **caractérisé par le fait que** le dispositif de codage est conçu à la manière d'une échelle de couleurs ou de niveaux de gris en deux dimensions.

6. Système d'après l'une des revendications précédentes, **caractérisé par le fait que** l'élément d'affichage est relié de manière mobile au boîtier par le biais d'un système de ressort, notamment un ressort en spirale.

7. Système d'après l'une des revendications précédentes, **caractérisé par le fait que** l'unité d'entrée, dont la fonction est de générer des signaux de commande pour l'unité de traitement dans le but de modifier les informations d'image représentées sur la surface d'affichage, comporte un deuxième élément d'activation rotatif, sachant que le deuxième élément d'activation est conçu comme un segment d'anneau disposé à la circonférence de la surface d'affichage et entourant en partie cette circonférence, ou comme un anneau entourant la surface d'affichage.

8. Système d'après la revendication 7, **caractérisé par le fait que** l'élément d'activation est disposé principalement dans le plan de la surface d'affichage.

9. Système d'après l'une des revendications précédentes, **caractérisé par le fait qu'**au moins un dispositif de pointage est prévu, la position duquel peut être changée par l'activation de l'élément d'activation dans le but de modifier, en fonction de sa position, les informations d'image présentées sur la surface d'affichage.

10. Système d'après l'une des revendications précédentes, **caractérisé par le fait que** l'unité d'entrée comporte au moins un système optique d'enregistrement dont la fonction est d'enregistrer la position angulaire du deuxième élément d'activation.

11. Système d'après l'une des revendications précédentes, **caractérisé par le fait que** l'unité d'entrée est conçue de manière à déclencher un signal de commande lorsqu'au moins une impulsion par pression est exercée sur l'élément d'activation.

12. Système d'après revendication 11, **caractérisé par le fait que** l'élément d'activation comporte au moins un élément de déclenchement sensible aux impulsions par pression pour le déclenchement de signaux de commande.

13. Système d'après revendication 12, **caractérisé par le fait que** l'élément d'activation comporte un revêtement élastique pour l'élément de déclenchement situé au niveau de l'élément de déclenchement, lequel revêtement constitue au moins une partie de la surface d'activation de l'élément d'activation.
